(19) Europäisches Patentamt
European Patent Office
Office européen des brevets

(11) **EP 2 071 120 B1**

(12) **FASCICULE DE BREVET EUROPEEN**

(45) Date de publication et mention
de la délivrance du brevet:
**02.11.2011 Bulletin 2011/44**

(51) Int Cl.:
*E06C 5/40* *(2006.01)* *B66F 11/04* *(2006.01)*

(21) Numéro de dépôt: **08291121.5**

(22) Date de dépôt: **28.11.2008**

(54) **Dispositif élévateur aérien et véhicule équipé d'un tel dispositif**

Lufthebevorrichtung und mit einer solchen Vorrichtung ausgerüstetes Fahrzeug

Aerial lift device and vehicle equipped with such a device

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **11.12.2007 FR 0708616**

(43) Date de publication de la demande:
**17.06.2009 Bulletin 2009/25**

(73) Titulaire: **Gimaex International
94100 Saint Maur des Fosses (FR)**

(72) Inventeur: **Bruneau, Michel
94350 Villiers sur Marne (FR)**

(74) Mandataire: **Hirsch & Associés
58, avenue Marceau
75008 Paris (FR)**

(56) Documents cités:
**DE-A1- 19 653 376    FR-A- 2 631 377
GB-A- 2 105 298**

# Description

La présente invention a pour objet un dispositif élévateur aérien et un véhicule équipé d'un tel dispositif.

Ici, l'expression « dispositif élévateur aérien » (ou « moyen élévateur aérien ») vise tout d'abord les dispositifs comprenant une échelle. Cependant, cette expression se rapporte également aux dispositifs de type « monte-meuble », « monte-matériaux » ou les dispositifs du type « bras élévateur ».

Un dispositif élévateur aérien comprend un élément, qui s'étend principalement selon un axe et qui peut être par exemple une échelle extensible, un mât éventuellement télescopique. Cet élément peut être muni d'un « panier », c'est-à-dire d'une nacelle, d'un plateau ou de tout type de support similaire. Le panier peut éventuellement se déplacer le long de l'élément ou, au contraire, être fixé à une extrémité libre de cet élément destinée à être élevée.

De manière connue, un dispositif élévateur aérien comporte également une base. L'élément est alors monté basculant par rapport à la base pour permettre d'élever l'extrémité libre de l'élément. Cette base est par ailleurs adaptée à être fixée sur un support.

En outre, un dispositif de commande du basculement de l'élément mobile par rapport à la base est également prévu pour élever l'extrémité libre de l'élément.

Dans le cas d'un bras élévateur, l'élément est formé par exemple par un premier tronçon du bras, monté pivotant par rapport à une base, de manière à pouvoir élever une extrémité de ce premier tronçon par rapport à la base. Le bras élévateur peut comporter un ou plusieurs autres tronçons montés pivotant les uns par rapport aux autres, un panier étant fixé à l'extrémité libre du dernier tronçon.

Ainsi, un dispositif élévateur aérien au sens de la présente invention est un dispositif qui permet soit à un individu soit à des objets d'atteindre un point situé en hauteur au dessus du sol ou même au dessous du plan du support du dispositif élévateur.

Cependant, l'utilisation d'un tel dispositif peut s'avérer difficile voire dangereuse lorsque la base d'un tel dispositif est posée sur un support qui présente un dévers, le dévers pouvant être accentué au niveau de l'extrémité libre de l'élément, notamment en fonction du dressage et/ou de l'allongement de l'élément.

Pour corriger le dévers de l'échelle, il est connu de FR 2 631 377 au nom de la demanderesse un dispositif de secours ou à usage industriel comportant un élément mobile d'intervention de grande longueur, s'étendant principalement selon un premier axe. Cet élément est monté sur un support susceptible d'être installé sur un châssis de véhicule. Le support comporte une tourelle rotative d'orientation portant un affût basculant de dressage. Au niveau d'une de ses extrémités, l'élément mobile d'intervention est monté en rotation sur l'affût basculant autour d'un second axe parallèle à l'axe de cet élément mobile d'intervention. Ce second axe est situé dans un plan contenant l'axe de rotation de la tourelle et est perpendiculaire à l'axe de dressage de l'affût. Par ailleurs, il est prévu, en plus des vérins de levage de l'élément mobile d'intervention, des moyens destinés à provoquer la rotation de l'élément mobile d'intervention autour du second axe, de manière à rétablir l'horizontalité des échelons - c'est-à-dire à corriger le dévers - de l'élément mobile d'intervention, du panier ou de tout autre organe de support solidaire de l'élément mobile d'intervention. FR 2 631 377 montre un dispositif selon le préambule de la revendication 1.

Cependant, ce dispositif est complexe. De plus, il présente un jeu entre l'élément mobile d'intervention et l'affût qui varie en utilisation, de sorte que ce dispositif présente un risque de blessure certain pour un utilisateur, notamment par pincement entre l'élément mobile d'intervention et l'affût. Afin d'éviter tout risque de blessure, des protections sont habituellement ménagées entre l'affût et l'élément mobile d'intervention d'un tel dispositif. Ces protections sont généralement réalisées sous la forme de soufflets en plastique montés entre l'affût et l'élément mobile d'intervention pour éviter que quelqu'un ou quelque chose soit inséré par mégarde entre l'affût et l'élément mobile d'intervention.

Par ailleurs, il est connu de DE 196 53 376 un dispositif d'échelle comprenant une base et une échelle fixée à un affût. L'affût est monté pivotant par rapport à la base selon un axe d'élévation de manière à assurer l'élévation, par rapport à la base, d'une extrémité libre de l'échelle. La base est par ailleurs montée sur un support de manière pivotante selon un axe horizontal perpendiculaire à l'axe d'élévation. Ainsi, selon DE 196 53 376, la correction du dévers de l'échelle est réalisée en corrigeant le dévers de la base par rapport au support. Pour ce faire, deux vérins sont disposés de part et d'autre de l'échelle, solidaires chacun du support et de l'affût, l'allongement des vérins pouvant être commandé de manière indépendante.

Dans le cas de ce dispositif, la masse à déplacer pour corriger le dévers est importante et nécessite donc une quantité importante d'énergie. Si les vérins mis en oeuvre dans ce dispositif sont hydrauliques, la quantité importante d'énergie nécessaire à la correction de dévers se traduit soit par l'utilisation de volumes importants de fluide hydraulique, soit par l'utilisation de dispositifs de mise sous pression du fluide hydraulique. Dans les deux cas, le dispositif demande des aménagements complexes et volumineux pour fonctionner correctement.

Par ailleurs, ce dispositif peut être difficile à mettre en oeuvre, notamment dans un espace réduit. En effet, la correction du dévers dans ce dispositif provoque de grands déplacements de l'échelle et notamment de son extrémité libre.

Le but de l'invention est donc de proposer un dispositif élévateur aérien perfectionné, ne présentant pas, notamment, les inconvénients des dispositifs connus.

Ce but est atteint, selon l'invention, au moyen d'un dispositif élévateur aérien comprenant :

- une base,
- un élément s'étendant principalement selon un premier axe et dont une extrémité libre est destinée à être élevée,
- une pièce intermédiaire interposée entre l'élément et la base, l'élément étant monté sur la pièce intermédiaire pivotant selon un deuxième axe pour corriger le dévers de l'élément, la pièce intermédiaire étant montée pivotante sur la base, selon un troisième axe pour assurer l'élévation de l'extrémité libre de l'élément par rapport à la base,
- deux dispositifs de levage de l'élément qui sont montés pivotant sur la base, et qui sont solidaires de l'élément, de part et d'autre du premier axe, et
- un dispositif de commande de chacun des deux dispositifs de levage de l'élément, chacun des deux dispositifs de levage étant monté pivotant sur l'élément.

Ainsi, selon l'invention, le dévers de l'élément est corrigé en déplaçant uniquement l'élément autour d'un axe de pivotement proche de l'axe de l'élément. Pour une même correction de dévers, le déplacement de l'élément est donc nettement réduit par rapport à un dispositif connu où le pivotement de cet élément est réalisé autour d'un axe de pivotement de la base par rapport au support du dispositif Le dispositif selon l'invention est donc plus maniable. En outre, un nombre moins important de pièces est déplacée, donc la masse déplacée est également plus faible. Il en résulte que le dispositif selon l'invention consomme moins d'énergie pour une même correction de dévers qu'un dispositif tel que mentionné ci-avant.

En outre, la mise en oeuvre d'un dispositif de commande de chacun des deux dispositifs de levage permet de mettre en oeuvre les dispositifs de levage à la fois pour le dressage de l'élément et pour la correction du dévers, en commandant les dispositifs de levage de manière appropriée.

Selon des variantes, le dispositif élévateur aérien selon l'invention comporte une ou plusieurs des caractéristiques suivantes, prises seules ou en combinaison :

- la distance entre le deuxième axe et le troisième axe est inférieure à 60 cm et de préférence nulle, cette distance étant mesurée le long d'un quatrième axe contenu dans le plan médian du dispositif, perpendiculaire à l'axe de correction de dévers et sécant avec l'axe de dressage ;
- la distance entre le premier axe et le deuxième axe est inférieure à 50 cm, de préférence inférieure à 30 cm, de préférence encore inférieure à 20 cm et de manière encore préférée nulle, cette distance étant mesurée le long d'un quatrième axe contenu dans le plan médian du dispositif, perpendiculaire à l'axe de correction de dévers et sécant avec l'axe de dressage ;

- la pièce intermédiaire est formée par un affût, l'élément étant monté pivotant par rapport au deuxième axe sur l'affût, l'affût étant monté pivotant par rapport au troisième axe sur la base, chacun des deux dispositifs de levage étant monté pivotant sur l'élément ;
- l'élément comporte un affût ;
- chacun des deux dispositifs de levage est monté pivotant sur l'affût ;
- chacun des dispositifs de levage de l'élément est un vérin simple corps ou un vérins double corps ;
- l'élément comporte une échelle ou un mât ;
- l'élément supporte un panier ;
- le panier est mobile en translation par rapport à l'élément ;
- l'entraxe entre les dispositifs de levage au niveau de l'élément ou de l'affût est différent de l'entraxe entre les dispositifs de levage au niveau de la base ;
- la base comporte une tourelle d'orientation adaptée à être montée pivotante sur un support, selon un cinquième axe perpendiculaire au support ;
- les dispositifs de levage sont des vérins et dans lequel le dispositif de commande est adapté à recevoir des informations relatives à l'horizontalité de la base et au dressage de l'élément par rapport à la base, et à commander en conséquence un allongement différent de chacun des deux vérins pour corriger le dévers de l'élément mobile ;
- les dispositifs de levage sont des vérins hydrauliques et dans lequel le dispositif de commande est adapté à recevoir une information relative au dévers de l'élément et à commander en conséquence un transvasement de fluide hydraulique depuis un vérin vers l'autre vérin pour corriger le dévers de l'élément mobile ; et
- le deuxième axe est parallèle au premier axe.

L'invention se rapporte également à un véhicule sur lequel est monté un dispositif élévateur aérien tel que décrit ci avant dans toutes ses combinaisons.
D'autres caractéristiques et avantages de l'invention apparaîtront à la lecture de la description détaillée qui suit d'un mode de réalisation de l'invention donné à titre d'exemple uniquement et en référence aux dessins qui montrent :

- figure 1, une vue arrière du dispositif selon un mode de réalisation préféré de l'invention,
- figure 2, une vue de côté du dispositif de la figure 1,
- figures 3a et 3b, un schéma de principe de la mesure de la distance entre l'axe de l'élément et l'axe de correction de dévers, d'une part, et de la distance entre l'axe de correction de dévers et l'axe de dressage de l'élément, d'autre part,
- figure 4, un schéma de principe d'un premier mode de réalisation du dispositif de commande de l'allongement des vérins mis en oeuvre dans le dispositif élévateur aérien des figures 1 et 2, et

- figure 5, un schéma de principe d'un deuxième mode de réalisation du dispositif de commande de l'allongement des vérins mis en oeuvre dans le dispositif élévateur aérien des figures 1 et 2.

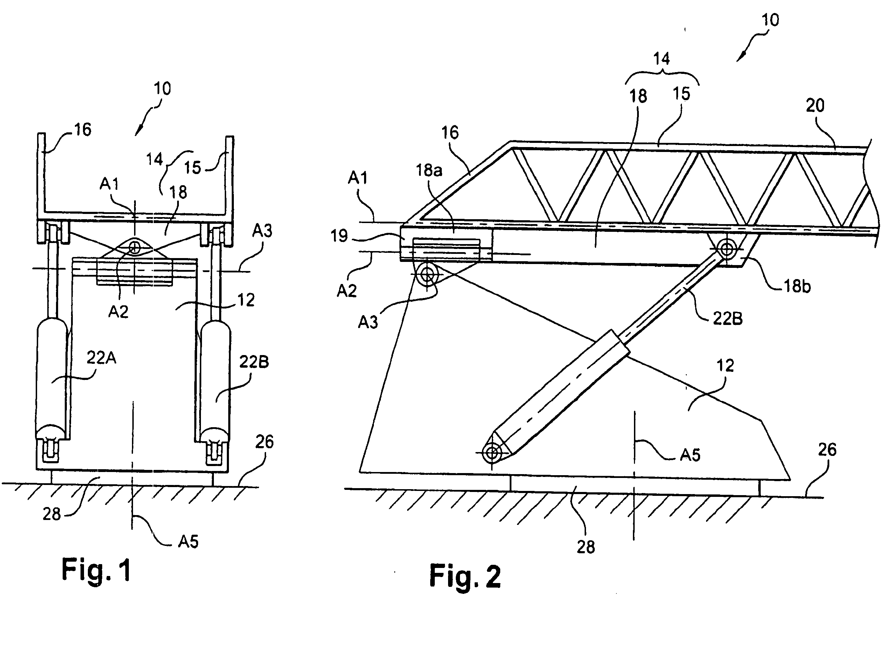

Le dispositif élévateur aérien 10, tel qu'illustré sur les figures 1 et 2, comprend une base 12, un élément 14 s'étendant principalement selon un premier axe A1. L'élément 14 comporte, en l'espèce une échelle 15 et un affût 18, l'échelle 15 étant fixée, à proximité de son extrémité 16, à l'affût 18. Dans le cas d'espèce, le premier axe A1 (ci-après « l'axe A1 de l'échelle 15 ») est par exemple, comme cela est représenté sur les figures 1 et 2, l'axe médian du plan de base de l'échelle 15.

Ici, l'affût 18 est monté pivotant sur une pièce intermédiaire 19 interposée entre l'élément 14 - plus précisément l'affût 18 - et la base 12.

Tel que cela est représenté sur les figures 1 et 2, l'affût 18 (et donc l'élément 14) est monté, au niveau d'une de ses extrémités 18a, sur la pièce intermédiaire 19, pivotant selon un deuxième axe A2 de correction de dévers, pour permettre la correction du dévers de l'élément 14.

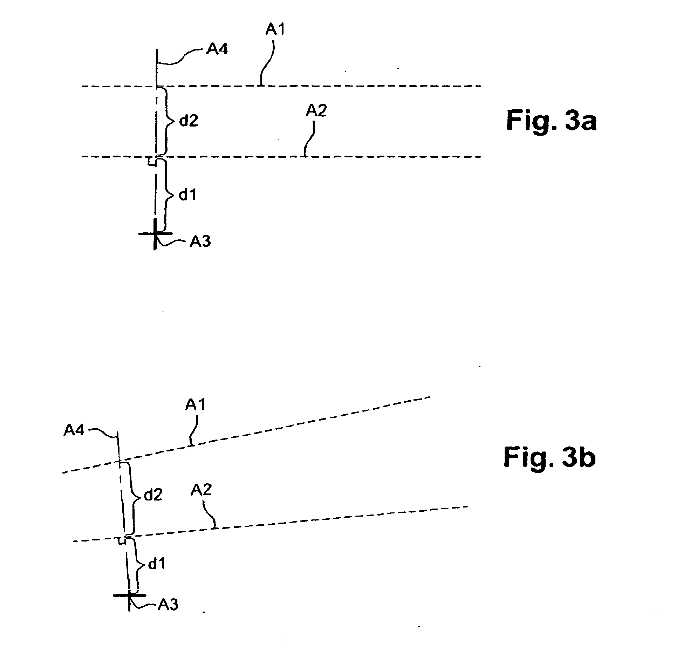

En l'espèce, l'axe de correction de dévers A2 est parallèle à l'axe A1 de l'échelle 15. Il est cependant connu de l'homme du métier que l'axe de correction de dévers A2 n'est pas forcément parallèle à l'axe A1 de l'échelle 15 (voir notamment la figure 3b). Ces deux axes peuvent notamment former un angle aigu dans le plan de la figure 2, c'est-à-dire dans le plan médian du dispositif élévateur aérien 10. Cependant, pour une même correction de dévers, la configuration dans laquelle l'axe de correction de dévers A2 est parallèle à l'axe A1 de l'échelle 15 permet de limiter le déplacement de l'extrémité libre de l'échelle du fait de cette correction de dévers par rapport à la configuration dans laquelle ces deux axes forment un angle aigu.

La pièce intermédiaire 19 est par ailleurs montée pivotante sur la base 12, autour d'un troisième axe A3 (ci-après « axe de dressage A3 ») pour assurer le dressage de l'élément et, ainsi, l'élévation d'une extrémité libre 20 de l'échelle 15 par rapport à la base 12.

Les figures 3a et 3b représentent schématiquement deux variantes de disposition des axes de l'échelle A1, de correction de dévers A2 et de dressage A3 du dispositif élévateur des figures 1 et 2, dans le plan médian du dispositif élévateur. Sur la figure 3a, l'axe de l'échelle A1 et l'axe de correction de dévers A2 sont parallèles. Au contraire, sur la figure 3b, l'axe de l'échelle A1 et l'axe de correction de dévers A2 forment un angle aigu dans le plan médian du dispositif élévateur. Dans les deux cas cependant, l'axe de dressage A3 est perpendiculaire au plan médian du dispositif élévateur et cet axe de dressage A3 est perpendiculaire à l'axe de l'échelle A1 et à l'axe de correction de dévers A2.

En référence aux figures 3a et 3b, on définit une première distance d1 comme étant la distance entre l'axe de correction de dévers A2 et l'axe de dressage A3, cette distance d1 étant mesurée le long d'un quatrième axe A4 contenu dans le plan médian du dispositif élévateur aérien 10, perpendiculaire à l'axe de correction de dévers A2 et sécant avec l'axe de dressage A3.

Toujours en référence aux figures 3a et 3b, on définit une deuxième distance d2 comme étant la distance entre l'axe A1 de l'échelle et l'axe de correction de dévers A2, cette deuxième distance d2 étant mesurée le long du quatrième axe A4 défini ci-dessus.

Le dispositif élévateur aérien 10 présente, de préférence, une distance d1 entre l'axe de correction de dévers A2 et l'axe de dressage A3 inférieure à 60 cm et de préférence nulle. Du fait de cette faible distance entre l'axe de correction de dévers A2 et l'axe de dressage A3, le centre de gravité de l'élément 14 est situé plus bas lorsque cet ensemble est en position route que dans le cas d'un dispositif classique. L'abaissement de ce centre gravité permet une conduite plus sûre du véhicule sur lequel le dispositif est monté du fait d'une amélioration sensible de la stabilité notamment dans les ronds point.

Par ailleurs, le dispositif élévateur aérien 10 présente, de préférence, une distance d2 entre l'axe de l'échelle A1 et l'axe de correction de dévers A2 inférieure à 50 cm, de préférence encore inférieure à 30 cm, de préférence encore inférieure à 20 cm et de manière encore préférée nulle. En effet, avec une telle distance d2, le déplacement de l'échelle nécessaire à la correction de dévers est limité. Le dispositif élévateur aérien 10 est ainsi très maniable et plus facile et plus sûr à utiliser. En outre, une faible distance d2 permet également une diminution de la longueur des vérins ainsi que de leur course, ce qui entraîne un gain de poids et une diminution de la quantité de fluide hydraulique à fournir.

De manière à dresser l'échelle 15, le dispositif élévateur aérien 10 selon l'invention comporte deux dispositifs de dressage, en l'espèce deux vérins 22A, 22B disposés de part et d'autre de l'affût 18. Ces vérins 22A, 22B sont solidaires chacun de la base 12 et de l'affût 18. En l'espèce, les vérins 22A, 22B sont des vérins hydrauliques simple corps. Plus précisément, les vérins 22A, 22B sont ici montés au niveau de l'extrémité 18b de l'affût 18, opposées à l'extrémité 18a pour permettre d'élever l'extrémité 18b de l'affût 18. Ces vérins 22A, 22B sont montés pivotant sur l'élément 14 autour d'un axe sensiblement perpendiculaire au plan de la figure 2.

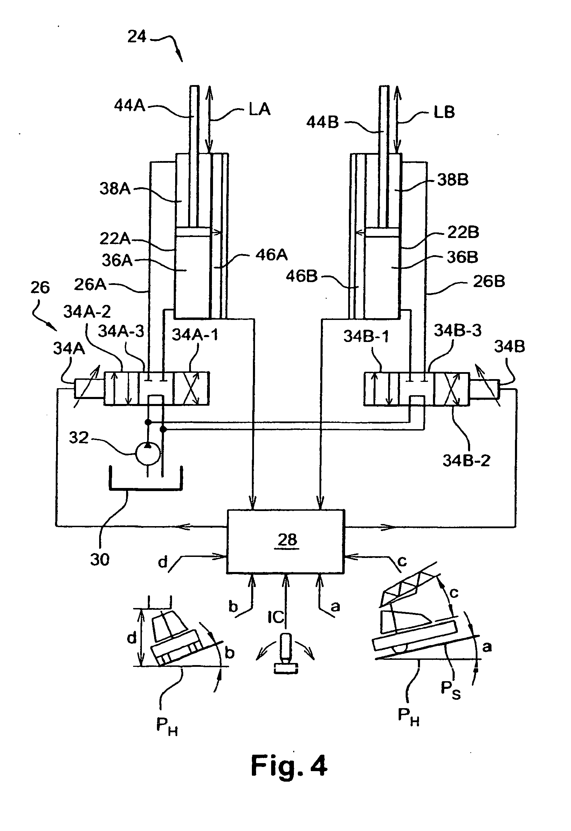

Le dispositif élévateur aérien 10 comporte également un dispositif de commande de chacun des vérins 22A, 22B indépendamment l'un de l'autre. Un premier mode de réalisation de ce dispositif de commande 24 est illustré à la figure 4. Tels que représentés sur cette figure 4, le dispositif de commande 24 comporte un circuit hydraulique 26 d'alimentation des vérins 22A, 22B et une unité électronique de commande 28. Ce dispositif de commande 24 est alimenté en fluide hydraulique - classiquement de l'huile - par un réservoir 30 au moyen d'une pompe 32 de mise en circulation du fluide hydraulique dans le circuit hydraulique 26. Le circuit hydraulique 26 comporte deux branches 26A, 26B identiques associées chacune à l'un des deux vérins 22A, 22B. Ces deux branches 26A, 26B sont disposées en parallèle, en aval de la pompe 32. Sur chacune des branches 26A, 26B est disposée une électrovanne 34A, 34B commandée par l'unité électronique de commande 28. En l'espèce, les électrovannes 34A, 34B présentent quatre orifices et trois positions de fonctionnement.

Dans une première position 34A-1, 34B-1 des électrovannes 34A, 34B, les chambres de dressage 36A, 36B des vérins 22A, 22B sont alimentées en fluide hydraulique par la pompe 32, tandis que les chambres d'abaissement 38A, 38B des vérins 22A, 22B sont en communications de fluide avec le réservoir 30.

Dans une deuxième position 34A-2, 34B-2 des électrovannes 34A, 34B, les chambres d'abaissement 38A, 38B des vérins 22A, 22B sont alimentées en fluide hydraulique par la pompe 32, tandis que les chambres de dressage 36A, 36B des vérins 22A, 22B sont en communications de fluide avec le réservoir 30.

Enfin, dans une troisième position 34A-3, 34B-3 des électrovannes 34A, 34B, la communication de fluide entre le réservoir 30 et les chambres de dressage 36A, 36B d'une part et les chambres d'abaissement 38A, 38B d'autre part est interrompue.

La position des deux électrovannes 34A, 34B peut être commandée indépendamment l'une de l'autre. Notamment, il est possible de commander le dressage d'un vérin (c'est-à-dire l'alimentation en fluide hydraulique de la chambre de dressage de l'un des vérins) tout en commandant l'abaissement de l'autre (c'est-à-dire l'alimentation en fluide hydraulique de la chambre d'abaissement de l'autre vérin).

En référence aux figures 1 et 2, la base du dispositif élévateur aérien 10 se compose en l'espèce d'une tourelle d'orientation 12 adaptée à être montée pivotante sur un support 26 selon un cinquième axe A5 (ci-après « axe d'orientation ») perpendiculaire au support 26. Pour ce faire, la tourelle 12 est montée sur une couronne d'orientation 28 solidaire du support 26. En l'espèce le support 26 de la tourelle 12 est monté sur un véhicule.

En l'espèce, le véhicule est un véhicule automobile du type camion, mais bien entendu, ce véhicule peut être de tout autre type, notamment du type véhicule automobile utilitaire ou même du type véhicule non automobile comme par exemple une remorque.

Le fonctionnement du dispositif élévateur aérien 10 selon l'invention découle de la description structurelle qui vient d'en être donnée.

Ainsi, le dispositif élévateur aérien 10 présente trois degrés de liberté pour que l'extrémité libre 20 de l'échelle 15 puisse atteindre tout point de l'espace situé à une distance du dispositif 10 inférieure à la longueur de l'échelle 15. Ces trois degrés de libertés sont :

- le mouvement de rotation de la tourelle d'orientation 12 autour de l'axe d'orientation A5 ;
- le mouvement de dressage de l'échelle 15 par rotation par rapport à l'axe de dressage A3 ; et
- le mouvement de translation de l'extrémité libre 20 de l'échelle mobile 15 parallèlement à l'axe A1 de l'échelle 15 ; ce mouvement est assuré en l'espèce du fait que l'échelle 15 est télescopique.

Le dispositif élévateur aérien 10 présente en outre un quatrième degré de liberté puisque l'affût 18 peut pivoter autour de l'axe de correction de dévers A2.

Ainsi, pour atteindre un point donné, l'utilisateur commande ou règle la rotation de la tourelle 12 autour de l'axe d'orientation A5, le dressage de l'échelle 15 par pivotement de l'échelle 15 autour de l'axe de dressage A3 et l'allongement de l'échelle 15. Ces trois mouvements peuvent être réalisés simultanément, successivement ou encore par séquences successives.

Cependant, dans le cas où le support 26, sur lequel la couronne d'orientation 28 est montée, n'est pas horizontal mais présente au contraire un dévers, ce dévers est ressenti éventuellement de manière accentuée au niveau de l'échelle 15. Dans ce cas, l'échelle 15 peut devenir dangereuse à utiliser voire inutilisable.

Pour corriger ce dévers de manière simultanée au réglage de la position de l'échelle 15, le dispositif de commande 24 assure une alimentation en fluide hydraulique des vérins indépendamment l'un de l'autre, ce qui permet à la fois le pivotement de l'échelle 15 autour de l'axe de dressage A3 et autour de l'axe A2 de correction de dévers pour corriger le dévers de l'échelle 15.

Pour ce faire, selon le mode de réalisation du dispositif de commande 24 représenté à la figure 4, l'unité électronique de commande 28 reçoit de capteurs appropriés les informations suivantes :

- l'angle b de dévers de la base 12 par rapport au plan horizontal $P_H$, mesuré dans le plan transversal du support du dispositif élévateur 10 ;
- l'angle d de dévers au niveau de l'échelle 15, dévers mesuré par rapport au plan horizontal $P_H$ ;
- l'angle c de dressage de l'échelle 15 mesuré entre l'affût 18 ou l'échelle 15 d'une part et la base 12 montée sur un véhicule, d'autre part ;
- l'angle a de la pente mesurée, dans le plan longitudinal du dispositif élévateur aérien, entre le plan $P_s$, sur lequel repose le véhicule sur lequel la base 12 est montée, et le plan horizontal $P_H$ ; et
- la longueur LA, LB de la tige 44A, 44B de chaque vérin 22A, 22B en dehors des vérins, ces longueurs étant mesurées au moyen de capteurs de position 46A, 46B.

Les différents angles sont mesurés à l'aide de capteurs d'angle qui sont des dispositifs connus de l'homme du métier.

L'unité électronique de commande 28 reçoit également l'information IC de commande de dressage ou d'abaissement et/ou de rotation droite ou gauche commandé par l'utilisateur.

A partir de ces informations, et plus particulièrement de l'angle c de dressage de l'échelle 15 et de la commande de dressage ou d'abaissement de l'utilisateur IC, l'unité électronique de commande 28 établit une consigne de référence de longueur LR pour les tiges 44A, 44B des vérins 22A, 22B qui doit être déployée.

Cependant, cette consigne de référence est modulée pour chaque vérin de manière à corriger le dévers de l'élément 15 et pour que soient vérifiées, à chaque instant, les relations suivantes :

$$LR = (LA+LB)/2$$

$$d=0.$$

Selon une variante avantageuse, la modulation de la consigne de référence est cartographiée dans l'unité électronique de commande, en fonction des angles a, b, c et de la longueur de référence LR.

Afin de suivre les consignes effectives, l'unité électronique de commande 18 commande alternativement ou simultanément les électrovannes 34A, 34B afin de commander l'alimentation des chambres de dressage 36A, 36B et/ou des chambres d'abaissement 38A, 38B d'un vérin 22A, 22B indépendamment de l'autre vérin 22B, 22A.

Pour ajuster la longueur de l'échelle 15, il suffit de commander le déploiement des éléments télescopiques de l'échelle 15.

Cependant, dans le cas du dispositif élévateur aérien 10, seuls l'affût 18 et l'échelle 15 sont déplacés pour corriger le dévers. En effet, l'axe de correction de dévers A2 autour duquel pivote l'échelle 15 pour corriger le dévers est proche de l'axe A 1 de l'échelle 15. De ce fait, pour corriger le dévers, le déplacement angulaire de l'échelle 15 est réduit. Une même correction de dévers se traduit ainsi par un déplacement moins important que dans le cas où l'échelle 15 doit pivoter autour d'un axe situé plus loin de son propre axe. La quantité d'énergie nécessaire pour corriger le dévers est ainsi plus faible que dans les dispositifs élévateurs aériens connus où la base est également déplacée. En outre, cette correction est moins dangereuse du fait des plus faibles amplitudes de déplacement nécessaire à la correction du dévers.

Par ailleurs, lorsque l'échelle 15 est mobile en rotation par rapport à l'affût 18, les mouvements de l'échelle peuvent être dangereux. Dans ce cas, des protections, comme des soufflets, doivent d'ailleurs être prévus entre l'échelle 15 et l'affût 18.

Cependant, dans le dispositif élévateur aérien 10, l'échelle 15 est fixée de manière solidaire à l'affût 18. Des éléments de protections montés entre l'échelle 15 et l'affût 18 sont donc inutiles. Le dispositif élévateur aérien 10 est donc à la fois plus sûr et moins cher à produire.

L'échelle 15, fixée de manière solidaire à l'affût 18, présente de plus une rigidité accrue à la torsion.

Par ailleurs, du fait de l'utilisation des mêmes vérins simple corps pour l'élévation de l'échelle 15 et pour la correction du dévers, le circuit hydraulique de commande des vérins 22A, 22B peut être simplifié. Ainsi, celui-ci peut inclure un distributeur hydraulique à trois tranches au lieu de quatre tranches dans les dispositifs connus. De plus, de nombreuses tuyauteries hydrauliques et des flexibles nécessaires dans les dispositifs de l'état de la technique sont supprimés. Il en résulte une réduction du coût d'approvisionnement et de montage du dispositif élévateur aérien par rapport aux dispositifs connus. Le poids du dispositif est également réduit, ne serait-ce que du fait de la réduction du nombre de vérins.

Bien entendu, la présente invention n'est pas limitée au mode de réalisation décrit à titre d'exemple et de nombreuses variantes sont envisageables sans sortir du cadre de l'invention.

Ainsi, les différents mouvements peuvent être réalisés soit de manière successive (on parle alors de mouvements séquentiels) et dans n'importe quel ordre, soit simultanément (on parle alors de mouvements combinés), soit par combinaison de mouvements séquentiels et de mouvements combinés successifs.

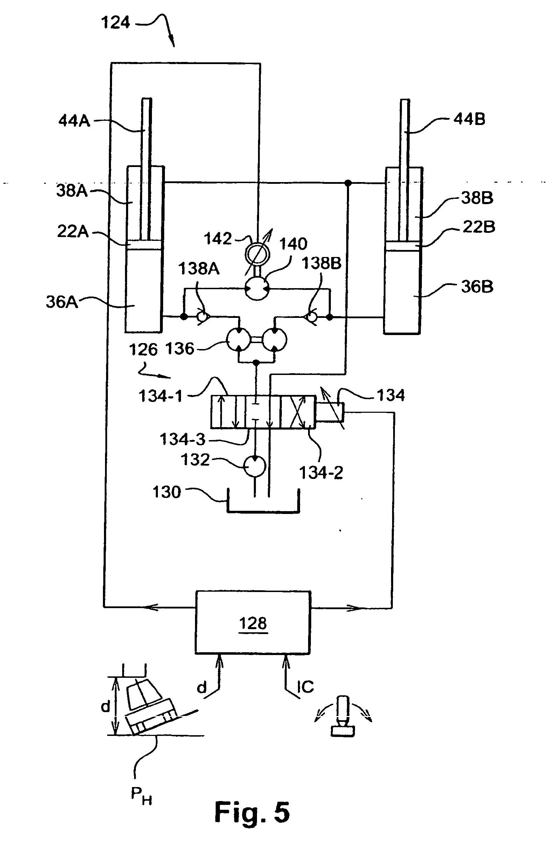

Par ailleurs, une variante 124 du dispositif de commande de chacun des vérins est représentée sur la figure 5.

Tels que représentés sur cette figure 5, le dispositif de commande 124 comporte un circuit hydraulique 126 d'alimentation des vérins 22A, 22B et une unité électronique de commande 128. Ce dispositif de commande 124 est alimenté en fluide hydraulique par un réservoir 130 au moyen d'une pompe 132 de mise en circulation du fluide hydraulique dans le circuit hydraulique 126. En aval de la pompe 132, le circuit hydraulique 126 comporte une électrovanne 134, commandée par l'unité électronique de commande 128. En l'espèce, l'électrovanne 134 présente quatre orifices et trois positions de fonctionnement.

Dans une première position 134-1 de l'électrovanne 134, les chambres de dressage 36A, 368 des vérins 22A, 22B sont alimentées en fluide hydraulique par la pompe 132, tandis que les chambres d'abaissement 38A, 38B des vérins 22A, 22B sont en communications de fluide avec le réservoir 130.

Dans une deuxième position 134-2 de l'électrovanne 134, les chambres d'abaissement 38A, 38B des vérins 22A, 22B sont alimentées en fluide hydraulique par la pompe 132, tandis que les chambres de dressage 36A, 36B des vérins 22A, 22B sont en communications de fluide avec le réservoir 132.

Enfin, dans une troisième position 134-3 de l'électrovanne 134, la communication de fluide entre le réservoir 130 et les chambres de dressage 36A, 36B est interrompue, tandis que les chambres d'abaissement 38A, 38B sont en communication de fluide avec le réservoir 130.

En aval de l'électrovanne 134 et en amont des chambres de dressage 36A, 36B, un diviseur de débit 136 est disposé dans le circuit hydraulique 126. Un tel diviseur de débit 136 permet d'assurer une alimentation égale en fluide hydraulique des chambres de dressage 36A, 36B. Ainsi, les quantités de fluide hydraulique alimentant respectivement chacune des chambres des vérins 22A, 22B provenant du diviseur de débit 136 est, à chaque instant, la même.

Par ailleurs, un clapet anti-retour 138A, 138B est interposé sur le circuit hydraulique 126, entre chacune des chambres de dressage 36A et 36B, d'une part, et le diviseur de débit 136, d'autre part. Selon la variante représentée du dispositif de commande, ces clapets anti-retour 138A, 138B sont commandés sélectivement afin qu'un vidage des chambres de dressage 36A, 36B soit réalisé, notamment lors des phases d'abaissement des vérins 22A, 22B.

Le dispositif de commande 124 selon ce deuxième mode de réalisation comporte en outre un dispositif de transvasement 140 qui permet de transvaser sélectivement une quantité de fluide hydraulique depuis l'une des deux chambres de dressage 36A, 36B vers l'autre chambre de dressage 36B, 36A. Ainsi, ce dispositif de transvasement 140 fonctionne sur le principe d'une pompe qui aspire une quantité de fluide hydraulique depuis une chambre de dressage 36A, 36B et qui transfert cette quantité de fluide hydraulique vers l'autre chambre de dressage 36B, 36A. Ce dispositif de transvasement 140 peut, comme cela est représenté sur la figure 5, être actionné par un moteur électrique 142 commandé par l'unité électronique de commande 128.

Cependant, selon une autre variante non représentée, le dispositif de transvasement est actionné par un moteur hydraulique alimenté en fluide hydraulique par le réservoir et la pompe. L'alimentation en fluide hydraulique du moteur hydraulique peut alors être commandée par l'unité électronique de commande, par l'intermédiaire d'une électrovanne.

Avec cette variante du dispositif de commande 124, l'unité électronique de commande 128 n'a besoin que de l'angle de dévers d mesuré par exemple sur l'échelle 15. En fonction du signe et de la valeur de cet angle de dévers d, l'unité électronique de commande 128 commande un transfert de fluide hydraulique depuis l'une des chambres de dressage 36A, 36B vers l'autre chambre de dressage 36B, 36A au moyen du dispositif de transvasement 140, de manière à corriger le dévers, c'est-à-dire jusqu'à ce que d = 0 (ou, en tout cas, que d soit inférieur à une valeur seuil prédéterminée). Cette correction peut être réalisée postérieurement au déploiement et au positionnement de l'échelle ou, de manière préférée, simultanément à ces actions.

En outre, selon une variante non représentée du dispositif élévateur aérien, les vérins sont des vérins double corps. Dans ce cas, un premier corps peut par exemple être mis en oeuvre de manière à dresser l'échelle et le second corps, de dimension réduite par rapport au premier corps, peut être mis en oeuvre uniquement pour corriger le dévers. Dans ce cas, les deux corps des vérins peuvent être alimentés au moyen de circuits hydrauliques distincts.

Par ailleurs, les vérins 22A, 22B qui sont représentés parallèles sur la figure 2, peuvent en variante être disposés en biais l'un par rapport à l'autre. En d'autres termes, l'entraxe entre les vérins 22A, 22B au niveau de l'affût 18 ou de l'échelle 15 (en fonction de la pièce sur laquelle ils sont fixés) est différent de - en particulier, inférieur à - l'entraxe entre les vérins 22A, 22B au niveau de la base 12. Cette mesure permet d'assurer une meilleure stabilité du dispositif élévateur aérien 10 et plus particulièrement de l'échelle 15. En effet, dans ce cas, une composante de force parallèle à la base apparaît, cette composante de force empêchant notamment une déviation latérale de l'échelle 15.

En outre, en variante, l'échelle peut être pivotante autour de l'axe de correction de dévers, par rapport à l'affût. Dans ce cas, les dispositifs de levage sont fixés sur l'échelle. Même dans ce cas, les distances d1 et d2 entre l'axe de l'échelle et l'axe de correction de dévers, d'une part, et entre l'axe de correction de dévers et l'axe de dressage sont de préférence comprises dans les intervalles de valeurs donnés précédemment pour assurer la proximité des différents axes.

Par ailleurs, tel que représenté sur les figures 1 et 2, l'élément mobile 15 est une échelle. Cependant, selon des variantes du dispositif élévateur aérien 10, cet élément mobile peut également être constitué par un bras ou un mat adapté à supporter un panier tel qu'une nacelle ou une plateforme, ce panier pouvant de plus être mobile en translation par rapport au mât. Ainsi, l'invention trouve des applications avantageuses dans des dispositifs tels que les dispositifs dits « monte-meuble » ou « monte-matériaux », les nacelles élévatrices ou similaires.

L'invention trouve également à s'appliquer dans le cas d'un bras élévateur tel que décrit ci-avant. En effet, il est connu de corriger le dévers du panier supporter par le dernier tronçon d'un tel bras élévateur au niveau de la liaison entre ce panier et ce dernier tronçon. Cependant, l'invention permet de corriger le dévers du panier en corrigeant le dévers du premier tronçon du bras, monté sur la base, via une pièce intermédiaire, pivotant selon deux axes perpendiculaires pour permettre d'une part le dressage du premier tronçon du bras et d'autre part la correction du dévers de ce premier tronçon.

## Revendications

1. Dispositif élévateur aérien (10) comprenant :

    - une base (12),
    - un élément (14) s'étendant principalement selon un premier axe (A1) et dont une extrémité libre (20) est destinée à être élevée,

- une pièce intermédiaire (19) interposée entre l'élément (14) et la base (12), l'élément (14) étant monté sur la pièce intermédiaire (19) pivotant selon un deuxième axe (A2) pour corriger le dévers de l'élément (14), la pièce intermédiaire (19) étant montée pivotante sur la base (12), selon un troisième axe (A3) pour assurer l'élévation de l'extrémité libre (20) de l'élément (14) par rapport à la base (12),
- deux dispositifs de levage (22A ; 22B) de l'élément (14) qui sont montés pivotant sur la base (12), et
- un dispositif (24 ; 124) de commande de chacun des deux dispositifs de levage (22A ; 22B) de l'élément (14),

**caractérisé en ce que** les deux dispositifs de levage (22A ; 22B) sont solidaires de l'élément (14), de part et d'autre du premier axe (A1), et **en ce que** chacun des deux dispositifs de levage (22A, 22B) est monté pivotant sur l'élément (14).

2. Dispositif selon la revendication 1, dans lequel la distance (d1) entre le deuxième axe (A2) et le troisième axe (A3) est inférieure à 60 cm et de préférence nulle, cette distance (d1) étant mesurée le long d'un quatrième axe (A4) contenu dans le plan médian du dispositif (10), perpendiculaire à l'axe de correction de dévers (A2) et sécant avec l'axe de dressage (A3).

3. Dispositif selon la revendication 1 ou 2, dans lequel la distance (d2) entre le premier axe (A1) et le deuxième axe (A2) est inférieure à 50 cm, de préférence inférieure à 30 cm, de préférence encore inférieure à 20 cm et de manière encore préférée nulle, cette distance (d2) étant mesurée le long d'un quatrième axe (A4) contenu dans le plan médian du dispositif (10), perpendiculaire à l'axe de correction de dévers (A2) et sécant avec l'axe de dressage (A3).

4. Dispositif selon l'une des revendications 1 à 3, dans lequel la pièce intermédiaire est formée par un affût (18), l'élément (14) étant monté pivotant par rapport au deuxième axe (A2) sur l'affût (18), l'affût (18) étant monté pivotant par rapport au troisième axe (A3) sur la base (12), chacun des deux dispositifs de levage (22A, 22B) étant monté pivotant sur l'élément (14).

5. Dispositif selon l'une des revendications 1 à 3, dans lequel l'élément (14) comporte un affût (18).

6. Dispositif selon la revendication 5, dans lequel chacun des deux dispositifs de levage (22A, 22B) est monté pivotant sur l'affût (18).

7. Dispositif selon l'une quelconque des revendications précédentes, dans lequel chacun des dispositifs de levage (22A; 22B) de l'élément (14) est un vérin simple corps ou un vérins double corps.

8. Dispositif selon l'une quelconque des revendications précédentes, dans lequel l'élément (14) comporte une échelle (15) ou un mât.

9. Dispositif selon l'une quelconque des revendications précédentes, dans lequel l'élément (14) supporte un panier, le panier étant de préférence mobile en translation par rapport à l'élément (14).

10. Dispositif selon l'une quelconque des revendications précédentes, dans lequel l'entraxe entre les dispositifs de levage (22A ; 22B) au niveau de l'élément (14) ou de l'affût (18) est différent de l'entraxe entre les dispositifs de levage (22A ; 22B) au niveau de la base (12).

11. Dispositif selon l'une quelconque des revendications précédentes, dans lequel la base (12) comporte une tourelle d'orientation (12) adaptée à être montée pivotante sur un support (24), selon un cinquième axe (A5) perpendiculaire au support (24).

12. Dispositif selon l'une quelconque des revendications précédentes, dans lequel les dispositifs de levage sont des vérins (22A ; 22B) et dans lequel le dispositif de commande (24) est adapté à recevoir des informations (a, b, c) relatives à l'horizontalité de la base (12) et au dressage de l'élément (14) par rapport à la base (12), et à commander en conséquence un allongement différent de chacun des deux vérins (22A ; 22B) pour corriger le dévers de l'élément mobile (14).

13. Dispositif selon l'une quelconque des revendications 1 à 11, dans lequel les dispositifs de levage sont des vérins hydrauliques et dans lequel le dispositif de commande (124) est adapté à recevoir une information relative au dévers de l'élément (14) et à commander en conséquence un transvasement de fluide hydraulique depuis un vérin (22A ; 22B) vers l'autre vérin (22B ; 22A) pour corriger le dévers de l'élément mobile (14).

14. Dispositif selon l'une quelconque des revendications précédentes, dans lequel le deuxième axe (A2) est parallèle au premier axe (A1).

15. Véhicule sur lequel est monté un dispositif (10) selon l'une quelconque des revendications précédentes.

**Claims**

1. High-rise aerial apparatus (10) comprising:

   - a base (12),

- a member (14) extending principally along a first axis (A1) and of which a free end (20) is designed to be elevated,

- an intermediate part (19) interposed between the said member (14) and the base (12), the said member (14) being pivotally mounted on the intermediate part (19) about a second axis (18) for off-level correction of said member (14), the intermediate part (19) being pivotally mounted on the base (12), about a third axis (A3) providing for elevation of the said free end (20) of the said member (14) with respect to the base (12),

- two elevating devices (22A; 22B) for said member (14) pivotally mounted on said base (12),

- a control device (24; 124) for controlling each one of said elevating devices (22A; 22B) for said member (14), **characterised in that** the two elevating devices (22A; 22B) are integral with said member (14) at each side of said first axis (A1), and that each one of the two elevating devices (22A; 22B) is pivotally mounted on the said member (14).

2. Apparatus according to claim 1, in which a distance (d1) between the second axis (A2) and the third axis (A3) is less than 60 cm and preferably is equal to zero, said distance (D1) being measured along a fourth axis (A4) contained in the median plane of said high-rise aerial apparatus (10), perpendicular to the said off-level correction axis (A2) and intersecting the said elevation axis (A3).

3. Apparatus according to claim 1 or 2, in which a distance (d2) between the first axis (A1) and the second axis (A2) is less than 50 cm, preferably less than 30 cm, more preferably less than 20 cm and even more preferably equal to zero, said distance (d2) being measured along a fourth axis (A4) contained in the median plane of the apparatus (10), perpendicular to the off-level correction axis (A2) and intersecting the elevation axis (A3).

4. The apparatus according to one of claims 1 to 3, in which said intermediate part is formed by a carriage (18), the said member (14) being pivotally mounted with respect to the second axis (A2) on the carriage (18), the carriage (18) being pivotally mounted with respect to the third axis (A3) on the base (12), each one of the two elevating devices (22A; 22B) being pivotally mounted on the said member (14).

5. The apparatus according to one of claims 1 to 3, in which the said member (14) includes a carriage (18).

6. The apparatus according to claim 5, in which each of the two elevating devices (22A; 22B) is pivotally mounted on the carriage (18).

7. The apparatus according to any one of the preceding claims, in which each one of the elevating devices (22A; 22B) of said member (14) is a single-body or dual-body ram.

8. The apparatus according to any one of the preceding claims, in which the member (14) includes a ladder (15) or a boom.

9. The apparatus according to any one of the preceding claims, in which the member (14) supports a basket, the basket preferably being movable with a translatory movement with respect to the member (14).

10. The apparatus according to any one of the preceding claims, in which a distance between axes of the elevating devices (22A; 22B) at the member (14) or at the carriage (18) is different from a distance between axes of the elevating devices (22A; 22B) at the said base (12).

11. The apparatus according to any one of the preceding claims, in which the base (12) includes an orientation turret (12) adapted to be pivotally mounted on a support (24) about a fifth axis (A5) perpendicular to the support (24).

12. The apparatus according to any one of the preceding claims, in which the elevating devices are rams (22A; 22B) and in which the control device (24) is adapted to receive information (a, b, c) relating to horizontality of said base (12) and elevation of the member (14) with respect to the base (12), and to control as a consequence a different extension of each one of the two rams (22A; 22B) in order to correct for off-level of the movable member (14).

13. The apparatus according to any one of claims 1 to 11, in which the elevating devices are hydraulic rams and in which the control device (124) is adapted to receive information concerning off-level of said member (14) and to control as a consequence thereof transfer of hydraulic fluid from one ram (22A; 22B) to the other ram (22B; 22A) in order to correct for off-level of the movable member (14).

14. The apparatus according to any one of the preceding claims, in which the second axis (A2) is parallel to the first axis (A1).

15. A vehicle having mounted thereon the apparatus (10) according to any one of the preceding claims.

**Patentansprüche**

1. Hebevorrichtung (10), Folgendes aufweisend:

- eine Basis (12),
- ein Element (14), das sich im Wesentlichen entlang einer ersten Achse (A1) erstreckt und dessen eines freie Ende (20) dazu bestimmt ist, gehoben zu werden,
- ein Zwischenteil (19), der zwischen das Element (14) und die Basis (12) eingefügt ist, wobei das Element (14) entlang einer zweiten Achse (A2) schwenkend auf den Zwischenteil (19) montiert ist, um die Schräglage des Elements (14) zu korrigieren, wobei der Zwischenteil (19) auf der Basis (12) entlang einer dritten Achse (A3) schwenkend montiert ist, um das Heben des freien Endes (20) des Elements (14) in Bezug zu der Basis (12) sicherzustellen,
- zwei Hubvorrichtungen (22A; 22B) des Elements (14), die auf der Basis (12) schwenkend montiert sind, und
- eine Vorrichtung (24; 124) zum Steuern jeder der zwei Hubvorrichtungen (22A; 22B) des Elements (14), **dadurch gekennzeichnet, dass** die zwei Hubvorrichtungen (22A; 22B) mit dem Element (14) zu beiden Seiten der ersten Achse (A1) verbunden sind, und dass jede der zwei Hubvorrichtungen (22A, 22B) auf dem Element (14) schwenkend montiert ist.

2. Vorrichtung nach Anspruch 1, bei der die Entfernung (d1) zwischen der zweien Achse (A2) und der dritten Achse (A3) kleiner ist als 60 cm und vorzugsweise gleich null, wobei diese Entfernung (d1) entlang einer vierten Achse (A4) gemessen wird, die in der mittleren Ebene der Vorrichtung (10), senkrecht zur Schräglagenkorrekturachse (A2) und mit der Richtachse schneidend enthalten ist.

3. Vorrichtung nach Anspruch 1 oder 2, bei der die Entfernung (d2) zwischen der ersten Achse (A1) und der zweiten Achse (A2) kleiner ist als 50 cm, vorzugsweise kleiner als 30 cm, vorzugsweise kleiner als 20 cm und noch bevorzugter gleich null, wobei diese Entfernung (d2) entlang einer vierten Achse (A4) gemessen wird, die in der mittleren Ebene der Vorrichtung (10) senkrecht zu der Schräglagenkorrekturachse (A2) und mit der Richtachse (A3) schneidend enthalten ist.

4. Vorrichtung nach einem der Ansprüche 1 bis 3, bei der der Zwischenteil aus einem Bock (18) besteht, wobei das Element (14) in Bezug zu der zweiten Achse (A2) auf dem Bock (18) schwenkend montiert ist, wobei der Bock (18) in Bezug zu der dritten Achse (A3) auf der Basis (12) schwenkend montiert ist, wobei jede der zwei Hubvorrichtungen (22A, 22B) schwenkend auf das Element (14) montiert ist.

5. Vorrichtung nach einem der Ansprüche 1 bis 3, bei der das Element (14) ein Gestell (18) aufweist.

6. Vorrichtung nach Anspruch 5, bei der jede der zwei Hubvorrichtungen (22A, 22b) auf dem Gestell (18) schwenkend montiert ist.

7. Vorrichtung nach einem der vorhergehenden Ansprüche, bei der jede der Hubvorrichtungen (22A; 22B) des Elements (14) ein Zylinder mit einfachem Körper oder ein Zylinder mit doppeltem Körper ist.

8. Vorrichtung nach einem der vorhergehenden Ansprüche, bei der das Element (14) eine Leiter (15) oder einen Mast aufweist.

9. Vorrichtung nach einem der vorhergehenden Ansprüche, bei der das Element (14) einen Korb trägt, wobei der Korb vorzugsweise in Bezug zu dem Element (14) in Verschiebung beweglich ist.

10. Vorrichtung nach einem der vorhergehenden Ansprüche, bei der der Achsabstand zwischen den Hubvorrichtungen (22A; 22B) am Element (14) oder am Gestell (18) vom Achsabstand zwischen den Hubvorrichtungen (22A; 22B) an der Basis (12) unterschiedlich ist.

11. Vorrichtung nach einem der vorhergehenden Ansprüche, bei der die Basis (12) einen Ausrichtungsturm (12) aufweist, der schwenkend auf einem Träger (24) entlang einer fünften Achse (A5) senkrecht zu dem Träger (24) montiert werden kann.

12. Vorrichtung nach einem der vorhergehenden Ansprüche, bei der die Hubvorrichtungen Zylinder (22A; 22B) sind und bei der die Steuervorrichtung (24) Informationen (a, b, c) in Zusammenhang mit der Horizontallage der Basis (12) und dem Aufrichten des Elements (14) in Bezug zu der Basis (12) empfangen und daher eine unterschiedliche Streckung jedes der zwei Zylinder (22A; 22B) zum Korrigieren der Schräglage des beweglichen Elements (14) steuern kann.

13. Vorrichtung nach einem der Ansprüche 1 bis 11, bei der die Hubvorrichtungen Hydraulikzylinder sind und bei der die Steuervorrichtung (124) eine Information in Zusammenhang mit der Schräglage des Elements (14) empfangen und ein Umfüllen von Hydraulikfluid von einem Zylinder (22A; 22B) zum anderen Zylinder (22B; 22A) entsprechend steuern kann, um die Schräglage des beweglichen Elements (14) zu korrigieren.

14. Vorrichtung nach einem der vorhergehenden Ansprüche, bei der die zweite Achse (A2) zu der ersten Achse (A1) parallel ist.

15. Fahrzeug, auf das eine Vorrichtung (10) nach einem der vorhergehenden Ansprüche montiert ist.

**Fig. 2**

**Fig. 1**

A4    A1

d2

A2

**Fig. 3a**

d1

A3

A1

A4

d2

A2

**Fig. 3b**

d1

A3

**Fig. 4**

**Fig. 5**

**EP 2 071 120 B1**

## RÉFÉRENCES CITÉES DANS LA DESCRIPTION

**Documents brevets cités dans la description**

- FR 2631377

- DE 19653376